# EUROPEAN PATENT APPLICATION

(11) **EP 4 509 810 A1**
(43) Date of publication of application: **19.02.2025**
(21) Application number: 23805833.3
(22) Date of filing: 21.06.2023
(51) Int. Cl.: G01M 3/26, G01M 3/32, H01M 10/42

(54) **SEALING PERFORMANCE TEST CABINET FOR BATTERY PACK**

(71) Applicant: Contemporary Amperex Technology (Hong Kong) Limited, Central, Central And Western District (HK)
(72) Inventor: ZHU, Zhiqin, Ningde, Fujian 352100 (CN)
(74) Representative: Gong, Jinping
(86) International application number: PCT/CN2023/101931
(87) International publication number: WO 2024/259685

(57) **Abstract**

This application discloses a sealing test cabinet for battery pack. The battery pack includes a battery pack body and a water cooling plate. The sealing test cabinet includes: a housing; a first test unit arranged in the housing, the first test unit being configured to test airtightness of the battery pack body; and a second test unit arranged in the housing, the second test unit being configured to test airtightness of the water cooling plate. The sealing test cabinet of this application can inspect airtightness of the battery pack body and airtightness of the water cooling plate at the same time, allowing for easy test operations and high automation.

## Description

### TECHNICAL FIELD

This application relates to the field of battery technologies, and specifically, to a sealing test cabinet for battery pack.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

Currently, sealing test devices for battery packs used in electric vehicles have limited functionality and low integration. In addition, airtightness of the battery pack body and airtightness of the water cooling plate cannot be inspected at the same time. As a result, the test process is cumbersome and not highly automated.

### SUMMARY

In view of the foregoing problems, this application provides a sealing test cabinet for battery pack, which can inspect airtightness of a battery pack body and airtightness of a water cooling plate at the same time, allowing for easy test operations and high automation.

This application provides a sealing test cabinet for battery pack. The battery pack includes a battery pack body and a water cooling plate. The sealing test cabinet includes: a housing; a first test unit arranged in the housing, the first test unit being configured to test airtightness of the battery pack body; and a second test unit arranged in the housing, the second test unit being configured to test airtightness of the water cooling plate.

In the technical solution in embodiments of this application, the first test unit configured to test the airtightness of the battery pack body and the second test unit configured to test the airtightness of the water cooling plate are both arranged in the housing of the sealing test cabinet. With such an arrangement, the sealing test cabinet is ready for use once being connected to a gas supply and a power supply and can inspect airtightness of the battery pack body and airtightness of the water cooling plate at the same time. Therefore, a highly integrated sealing test cabinet is achieved, which is easy to operate and highly automated.

In some embodiments, the sealing test cabinet further includes: a pressure stabilizing tank, where the pressure stabilizing tank is operably connected to the first test unit and the second test unit and configured to inject gas to the battery pack body and the water cooling plate; and a vacuum generator, where the vacuum generator is operably connected to the first test unit and the second test unit and configured to extract gas from the battery pack body and the water cooling plate. With the pressure stabilizing tank injecting gas, airtightness can be inspected for the battery pack body and the water cooling plate under positive pressure. With the vacuum generator extracting gas, airtightness can be inspected for the battery pack body and the water cooling plate under negative pressure. Therefore, seamless switching between the positive pressure test and the negative pressure test can be achieved according to different requirements.

In some embodiments, the first test unit includes: a first standard end, the first standard end being configured to provide a first standard end pressure in a first test stage; a first test end, the first test end being connected to the battery pack body via a first test monitoring interface and configured to provide a first test end pressure in the first test stage; a first differential pressure sensor, the first differential pressure sensor being configured to detect a differential pressure value between the first standard end pressure and the first test end pressure in the first test stage; and a first leak detector, the first leak detector being configured to provide an inspection result of the airtightness of the battery pack body based on the differential pressure value between the first standard end pressure and the first test end pressure. With such an arrangement, the airtightness of the battery pack body can be precisely inspected by differential pressure measurement.

In some embodiments, the first standard end pressure is provided by injecting gas to the first standard end using the pressure stabilizing tank via a first control valve and a first standard end pressure stabilizing valve, and the first test end pressure is provided by injecting gas to the first test end using the pressure stabilizing tank via the first control valve and a first test end pressure stabilizing valve, where both the first standard end pressure and the first test end pressure are positive pressures. Stable and accurate provision of the first standard end pressure and the first test end pressure can be ensured by injecting gas using the pressure stabilizing tank via the related control valve and pressure stabilizing valve.

In some embodiments, the first test stage includes a first injection period, a first pressure stabilization period, and a first test period, where: during the first injection period, the first control valve, the first standard end pressure stabilizing valve, and the first test end pressure stabilizing valve are all open, and gas is injected to the first standard end and the first test end using the pressure stabilizing tank at a first injection pressure controlled by a first injection pressure reducing valve, such that at the end of the first injection period, the first standard end pressure and the first test end pressure are substantially equal to a first specified pressure; during the first pressure stabilization period following the first injection period, the first control valve is closed, such that the gas injection is stopped and the first standard end and the first test end communicate with each other for pressure stabilization; and during the first test period following the first pressure stabilization period, the first standard end pressure stabilizing valve and the first test end pressure stabilizing valve are closed to stop the pressure stabilization, and after a predetermined time, the first differential pressure sensor detects the differential pressure value between the first standard end pressure and the first test end pressure, and the first leak detector provides the inspection result of the airtightness of the battery pack body based on the differential pressure value between the first standard end pressure and the first test end pressure. With such an arrangement, inspection precision of inspecting the airtightness of the battery pack body by differential pressure measurement can be further improved.

In some embodiments, the first test stage further includes a first pre-injection period prior to the first injection period, where during the first pre-injection period, gas is injected to the first standard end and the first test end using the pressure stabilizing tank at a first pre-injection pressure controlled by the first injection pressure reducing valve, the first pre-injection pressure being greater than the first injection pressure. By initially using a higher pre-injection pressure for a specified time for pre-injection, followed by switching to a normal injection pressure for gas injection, the gas injection can be completed more quickly and the test result can be more accurate.

In some embodiments, the first standard end pressure is provided by extracting gas from the first standard end using the vacuum generator via a first control valve and a first standard end pressure stabilizing valve, and the first test end pressure is provided by extracting gas from the first test end using the vacuum generator via the first control valve and a first test end pressure stabilizing valve, where both the first standard end pressure and the first test end pressure are negative pressures. Stable and accurate provision of the first standard end pressure and the first test end pressure can be ensured by extracting gas using the vacuum generator via the related control valve and pressure stabilizing valve.

In some embodiments, the first test stage includes a first extraction period, a first pressure stabilization period, and a first test period, where: during the first extraction period, the first control valve, the first standard end pressure stabilizing valve, and the first test end pressure stabilizing valve are all open, and gas is extracted from the first standard end and the first test end using the vacuum generator at a first extraction pressure controlled by a first extraction pressure reducing valve, such that at the end of the first extraction period, the first standard end pressure and the first test end pressure are substantially equal to a first specified pressure; during the first pressure stabilization period following the first extraction period, the first control valve is closed, such that the gas extraction is stopped and the first standard end and the first test end communicate with each other for pressure stabilization; and during the first test period following the first pressure stabilization period, the first standard end pressure stabilizing valve and the first test end pressure stabilizing valve are closed to stop the pressure stabilization, and after a predetermined time, the first differential pressure sensor detects the differential pressure value between the first standard end pressure and the first test end pressure, and the first leak detector provides the inspection result of the airtightness of the battery pack body based on the differential pressure value between the first standard end pressure and the first test end pressure. With such an arrangement, inspection precision of inspecting the airtightness of the battery pack body by differential pressure measurement can be further improved.

In some embodiments, the first test stage further includes a first pre-extraction period prior to the first extraction period, where during the first pre-extraction period, gas is extracted from the first standard end and the first test end using the vacuum generator at a first pre-extraction pressure controlled by the first extraction pressure reducing valve, the first pre-extraction pressure being greater than the first extraction pressure. By initially using a higher pre-extraction pressure for a specified time for pre-extraction, followed by switching to a normal extraction pressure for gas extraction, the gas extraction can be completed more quickly and the test result can be more accurate.

In some embodiments, the first test unit further includes a first calibration portion, the first calibration portion being configured to perform automatic calibration of the first test unit. Performing automatic calibration can achieve automatic spot checks, and uploading the test results to a manufacturing execution system can confirm that the entire test system has no anomaly, facilitating seamless switching between automatic calibration and product test.

In some embodiments, the first test unit further includes: a first inlet pressure sensor, the first inlet pressure sensor being configured to detect an injection pressure for injecting gas to the battery pack body or an extraction pressure for extracting gas from the battery pack body; and a first outlet pressure sensor, the first outlet pressure sensor being configured to detect a gas pressure at an outlet of the battery pack body; where based on detection results of the first inlet pressure sensor and the first outlet pressure sensor, fault diagnosis is able to be performed for the first test unit. With such a fault diagnosis, various faults in the first test unit can be quickly found and promptly dealt with.

In some embodiments, the second test unit includes: a second standard end, the second standard end being configured to provide a second standard end pressure in a second test stage; a second test end, the second test end being connected to the water cooling plate via a second test monitoring interface and configured to provide a second test end pressure in the second test stage; a second differential pressure sensor, the second differential pressure sensor being configured to detect a differential pressure value between the second standard end pressure and the second test end pressure in the second test stage; and a second leak detector, the second leak detector being configured to provide an inspection result of the airtightness of the water cooling plate based on the differential pressure value between the second standard end pressure and the second test end pressure. With such an arrangement, the airtightness of the water cooling plate can be precisely inspected by differential pressure measurement.

In some embodiments, the second standard end pressure is provided by injecting gas to the second standard end using the pressure stabilizing tank via a second control valve and a second standard end pressure stabilizing valve, and the second test end pressure is provided by injecting gas to the second test end using the pressure stabilizing tank via the second control valve and a second test end pressure stabilizing valve, where both the second standard end pressure and the second test end pressure are positive pressures. Stable and accurate provision of the second standard end pressure and the second test end pressure can be ensured by injecting gas using the pressure stabilizing tank via the related control valve and pressure stabilizing valve.

In some embodiments, the second test stage includes a second injection period, a second pressure stabilization period, and a second test period, where: during the second injection period, the second control valve, the second standard end pressure stabilizing valve, and the second test end pressure stabilizing valve are all open, and gas is injected to the second standard end and the second test end using the pressure stabilizing tank at a second injection pressure controlled by a second injection pressure reducing valve, such that at the end of the second injection period, the second standard end pressure and the second test end pressure are substantially equal to a second specified pressure; during the second pressure stabilization period following the second injection period, the second control valve is closed, such that the gas injection is stopped and the second standard end and the second test end communicate with each other for pressure stabilization; and during the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector provides the inspection result of the airtightness of the water cooling plate based on the differential pressure value between the second standard end pressure and the second test end pressure. With such an arrangement, inspection precision of inspecting the airtightness of the water cooling plate by differential pressure measurement can be further improved.

In some embodiments, the second test stage further includes a second pre-injection period prior to the second injection period, where during the second pre-injection period, gas is injected to the second standard end and the second test end using the pressure stabilizing tank at a second pre-injection pressure controlled by the second injection pressure reducing valve, the second pre-injection pressure being greater than the second injection pressure. By initially using a higher pre-injection pressure for a specified time for pre-injection, followed by switching to a normal injection pressure for gas injection, the gas injection can be completed more quickly and the test result can be more accurate.

In some embodiments, the second standard end pressure is provided by extracting gas from the second standard end using the vacuum generator via a second control valve and a second standard end pressure stabilizing valve, and the second test end pressure is provided by extracting gas from the second test end using the vacuum generator via the second control valve and a second test end pressure stabilizing valve, where both the second standard end pressure and the second test end pressure are negative pressures. Stable and accurate provision of the second standard end pressure and the second test end pressure can be ensured by extracting gas using the vacuum generator via the related control valve and pressure stabilizing valve.

In some embodiments, the second test stage includes a second extraction period, a second pressure stabilization period, and a second test period, where: during the second extraction period, the second control valve, the second standard end pressure stabilizing valve, and the second test end pressure stabilizing valve are all open, and gas is extracted from the second standard end and the second test end using the vacuum generator at a second extraction pressure controlled by a second extraction pressure reducing valve, such that at the end of the second extraction period, the second standard end pressure and the second test end pressure are substantially equal to a second specified pressure; during the second pressure stabilization period following the second extraction period, the second control valve is closed, such that the gas extraction is stopped and the second standard end and the second test end communicate with each other for pressure stabilization; and during the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector provides the inspection result of the airtightness of the water cooling plate based on the differential pressure value between the second standard end pressure and the second test end pressure. With such an arrangement, inspection precision of inspecting the airtightness of the water cooling plate by differential pressure measurement can be further improved.

In some embodiments, the second test stage further includes a second pre-extraction period prior to the second extraction period, where during the second pre-extraction period, gas is extracted from the second standard end and the second test end using the vacuum generator at a second pre-extraction pressure controlled by the second extraction pressure reducing valve, the second pre-extraction pressure being greater than the second extraction pressure. By initially using a higher pre-extraction pressure for a specified time for pre-extraction, followed by switching to a normal extraction pressure for gas extraction, the gas extraction can be completed more quickly and the test result can be more accurate.

In some embodiments, the second test unit further includes a second calibration portion, the second calibration portion being configured to perform automatic calibration of the second test unit. Performing automatic calibration can achieve automatic spot checks, and uploading the test results to a manufacturing execution system can confirm that the entire test system has no anomaly, facilitating seamless switching between automatic calibration and product test.

In some embodiments, the second test unit further includes: a second inlet pressure sensor, the second inlet pressure sensor being configured to detect an injection pressure for injecting gas to the water cooling plate or an extraction pressure for extracting gas from the water cooling plate; and a second outlet pressure sensor, the second outlet pressure sensor being configured to detect a gas pressure at an outlet of the water cooling plate; where based on detection results of the second inlet pressure sensor and the second outlet pressure sensor, fault diagnosis is able to be performed for the second test unit. With such a fault diagnosis, various faults in the second test unit can be quickly found and promptly dealt with.

In some embodiments, the sealing test cabinet includes an exhaust valve, the exhaust valve being configured to discharge gas inside the battery pack body and/or the water cooling plate after the test is completed. Discharging the gas filled into the battery pack body and the water cooling plate in a timely manner after the test is completed can prevent the problems such as bulging of the battery pack body or failure in smooth removal of the workpiece caused by residual gas.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a connection relationship between various components of a sealing test cabinet for battery pack according to an embodiment of this application;
FIG. 2 is a schematic structural diagram of a sealing test cabinet according to an embodiment of this application;
FIG. 3 is another schematic structural diagram of a sealing test cabinet according to an embodiment of this application;
FIG. 4 is a partially enlarged view of FIG. 3;
FIG. 5 is an operational flowchart of a sealing test cabinet according to an embodiment of this application; and
FIG. 6 is another operational flowchart of a sealing test cabinet according to an embodiment of this application.

The accompanying drawings are not drawn to scale.

Reference signs in the specific embodiments are described as follows:
1. plant gas supply, 2. three-way connector, 3. pressure stabilizing tank, 4. first injection pressure reducing valve, 5. first extraction pressure reducing valve, 6. vacuum generator, 7. second injection pressure reducing valve, 8. second control valve, 9. temperature sensor, 10. first control valve, 11. venting valve, 12. first inlet pressure sensor, 13. internal exhaust valve, 14. first test end pressure stabilizing valve, 15. first standard end pressure stabilizing valve, 16. first differential pressure sensor, 17. first test end shut-off valve, 18. first standard end shut-off valve, 19. external exhaust valve, 20. calibration gas control valve, 21. standard leak hole, 22. calibration leak gas control valve, 23. calibration standard tank, 24. second outlet pressure sensor, 25. first outlet pressure sensor, 26. battery pack body, 27. water cooling plate, 28. test gas control valve, 29. first leak detector, 30. second leak detector, 31. indication panel, 32. control valve group, 33. test standard tank, 34. test monitoring interface, 35. electrical control cabinet, 100. sealing test cabinet, and 101. housing.

### DESCRIPTION OF EMBODIMENTS

The following describes in detail the embodiments of technical solutions in this application with reference to the accompanying drawings. The following embodiments are merely used to describe the technical solutions in this application more clearly, and therefore are merely used as examples and do not constitute any limitation on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of the descriptions of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, when a differential pressure leak detector is used to perform a sealing test on a battery pack and a water cooling plate, an external standard end is required for the test, resulting in low integration of the sealing test device. In addition, airtightness of the battery pack body and airtightness of the water cooling plate cannot be inspected at the same time. As a result, the test process is cumbersome and not highly automated.

To solve the foregoing problems, this application provides a sealing test cabinet for battery pack. A first test unit configured to test airtightness of a battery pack body and a second test unit configured to test airtightness of a water cooling plate are both arranged in a housing of the sealing test cabinet, such that the sealing test cabinet is ready for use once being connected to a gas supply and a power supply and can inspect airtightness of the battery pack body and airtightness of the water cooling plate at the same time. Therefore, a highly integrated sealing test cabinet is achieved, which is easy to operate and highly automated.

The battery pack disclosed in the embodiments of this application may be used without limitation in electric apparatuses such as vehicles, ships, or aircrafts. The sealing test cabinet disclosed in the embodiments of this application can be used to test the airtightness of the battery pack body and the water cooling plate that are included in the battery pack, and a battery pack that passes the airtightness test can be used to form a power supply system of the electric apparatus.

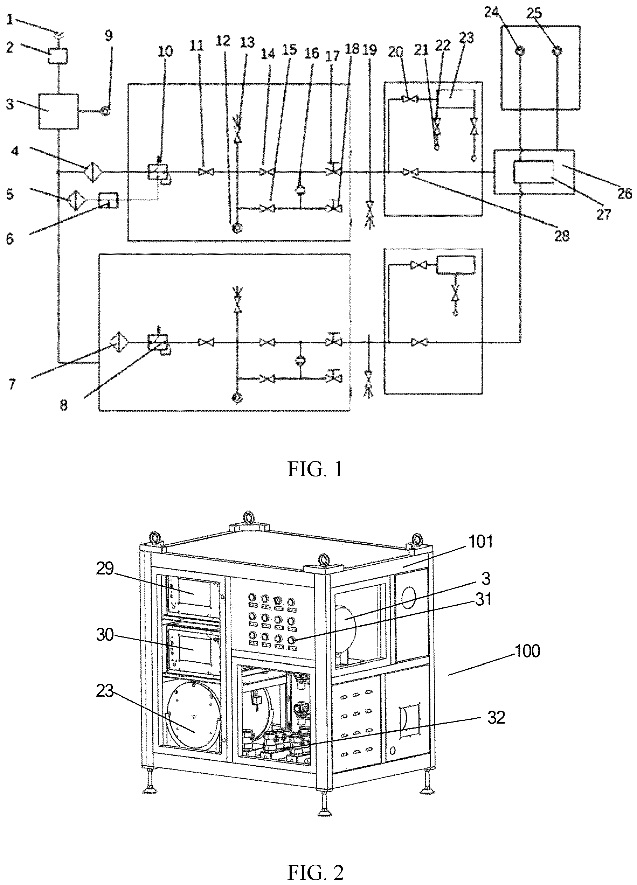

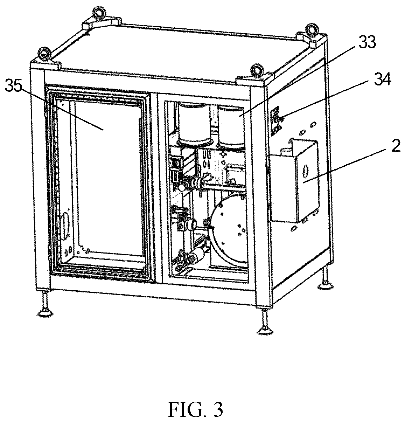

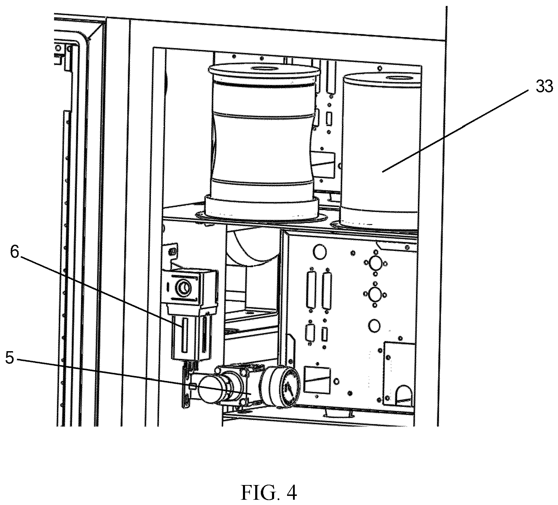

According to some embodiments of this application, a sealing test cabinet for battery pack is described with reference to FIG. 1 to FIG. 4. FIG. 1 is a schematic diagram of a connection relationship between various components of a sealing test cabinet for battery pack according to an embodiment of this application. FIG. 2 is a schematic structural diagram of a sealing test cabinet according to an embodiment of this application. FIG. 3 is another schematic structural diagram of a sealing test cabinet according to an embodiment of this application. FIG. 4 is a partially enlarged view of FIG. 3. This application provides a sealing test cabinet 100 for battery pack. As shown in the figure, the battery pack includes a battery pack body 26 and a water cooling plate 27. The sealing test cabinet 100 includes a housing 101, a first test unit arranged in the housing 101, and a second test unit arranged in the housing 101. The first test unit is configured to test airtightness of the battery pack body 26, and the second test unit is configured to test airtightness of the water cooling plate 27. Configuration details of the first test unit and the second test unit are further described below.

In addition, as shown in FIG. 2 and FIG. 3, a control valve group 32 including various control valves is also arranged in the housing 101 of the sealing test cabinet 100, and details thereof are described below. Optionally, an electrical control cabinet 35 is further provided in the sealing test cabinet 100, and related electrical and control elements may be disposed in the electrical control cabinet 35.

The first test unit configured to test the airtightness of the battery pack body 26 and the second test unit configured to test the airtightness of the water cooling plate 27 are both arranged in the housing 101 of the sealing test cabinet 100, such that the sealing test cabinet 100 is ready for use once being conntect to a plant gas supply 1 and a power supply and can inspect airtightness of the battery pack body 26 and airtightness of the water cooling plate 27 at the same time. Therefore, a highly integrated sealing test cabinet is achieved, which is easy to oeprate and highly automated.

According to some embodiments of this application, optionally, the sealing test cabinet 100 may include a pressure stabilizing tank 3. As shown in FIG. 1, the plant gas supply 1 may be connected to the pressure stabilizing tank 3 via a three-way connector 2 to supply gas to the pressure stabilizing tank 3. The pressure stabilizing tank 3 is operably connected to the first test unit and the second test unit of the sealing test cabinet 100 and is configured to inject gas to the battery pack body 26 and the water cooling plate 27. Further optionally, the sealing test cabinet 100 may further include a vacuum generator. As shown in FIG. 1 and FIG. 4, a first extraction pressure reducing valve 5 is connected to the vacuum generator 6, and the vacuum generator 6 is operably connected to the first test unit and configured to extract gas from the battery pack body 26. However, persons skilled in the art should understand that the vacuum generator can be operably connected to both the first test unit and the second test unit and configured to extract gas from the battery pack body 26 and the water cooling plate 27. With the pressure stabilizing tank 3 injecting gas, airtightness can be inspected for the battery pack body 26 and the water cooling plate 27 under positive pressure. With the vacuum generator extracting gas, airtightness can be inspected for the battery pack body 26 and the water cooling plate 27 under negative pressure. Therefore, seamless switching between the positive pressure test and the negative pressure test can be achieved according to different requirements.

According to some embodiments of this application, optionally, the first test unit includes a first standard end, a first test end, a first differential pressure sensor 16, and a first leak detector 29. As shown in FIG. 1 and FIG. 3, the first standard end may be connected to a test standard tank 33 via a first standard end shut-off valve 18, such that the first standard end is configured to provide a first standard end pressure in a first test stage. The test standard tank 33 may be, for example, a standard volume tank with a capacity of 400 milliliters. Referring to FIG. 3, a test monitoring interface 34 may include a first test monitoring interface and a second test monitoring interface. The first test end is connected to the battery pack body 26 via a first test end shut-off valve 17, a test gas control valve 28, and the first test monitoring interface and configured to provide a first test end pressure in the first test stage. The first differential pressure sensor 16 is configured to detect a differential pressure value between the first standard end pressure and the first test end pressure in the first test stage. The first leak detector 29 is configured to provide an inspection result of the airtightness of the battery pack body 26 based on the differential pressure value between the first standard end pressure and the first test end pressure. The detection result can be displayed on an indication panel 31. With such an arrangement, the airtightness of the battery pack body 26 can be precisely inspected by differential pressure measurement.

According to some embodiments of this application, optionally, the first standard end pressure is provided by injecting gas to the first standard end using the pressure stabilizing tank 3 via a first control valve 10 and a first standard end pressure stabilizing valve 15, and the first test end pressure is provided by injecting gas to the first test end using the pressure stabilizing tank 3 via the first control valve 10 and a first test end pressure stabilizing valve 14, where both the first standard end pressure and the first test end pressure are positive pressures. As shown in FIG. 1, a venting valve 11 may further be disposed between the first control valve 10 and both the first test end pressure stabilizing valve 14 and the first standard end pressure stabilizing valve 15. Stable and accurate provision of the first standard end pressure and the first test end pressure can be ensured by injecting gas using the pressure stabilizing tank 3 via the related control valve and pressure stabilizing valve.

According to some embodiments of this application, optionally, the first test stage includes a first injection period, a first pressure stabilization period, and a first test period. Specifically, during the first injection period, the first control valve 10, the first standard end pressure stabilizing valve 15, and the first test end pressure stabilizing valve 14 are all open, and gas is injected to the first standard end and the first test end using the pressure stabilizing tank 3 at a first injection pressure controlled by a first injection pressure reducing valve 4, such that at the end of the first injection period, the first standard end pressure and the first test end pressure are substantially equal to a first specified pressure. During the first pressure stabilization period following the first injection period, the first control valve 10 is closed, such that the gas injection is stopped, and the first standard end pressure stabilizing valve 15 and the first test end pressure stabilizing valve 14 remain open, such that the first standard end and the first test end communicate with each other for pressure stabilization. During the first test period following the first pressure stabilization period, the first standard end pressure stabilizing valve 15 and the first test end pressure stabilizing valve 14 are closed to stop the pressure stabilization, and after a predetermined time, the first differential pressure sensor 16 detects the differential pressure value between the first standard end pressure and the first test end pressure, and the first leak detector 29 provides the inspection result of the airtightness of the battery pack body 26 based on the differential pressure value between the first standard end pressure and the first test end pressure. The detection result can be displayed on the indication panel 31. With such an arrangement, inspection precision of inspecting the airtightness of the battery pack body by differential pressure measurement can be further improved.

According to some embodiments of this application, optionally, the first test stage further includes a first pre-injection period prior to the first injection period. During the first pre-injection period, gas is injected to the first standard end and the first test end using the pressure stabilizing tank 3 at a first pre-injection pressure controlled by the first injection pressure reducing valve 4. The first pre-injection pressure is typically set to be greater than the first injection pressure. By initially using a higher pre-injection pressure for a specified time for pre-injection, followed by switching to a normal injection pressure for gas injection, the gas injection can be completed more quickly and the test result can be more accurate.

According to some embodiments of this application, optionally, the first standard end pressure is provided by extracting gas from the first standard end using the vacuum generator 6 via a first control valve 10 and a first standard end pressure stabilizing valve 15. Therefore, the first standard end pressure is a negative pressure. In addition, the first test end pressure can be provided by extracting gas from the first test end using the vacuum generator via the first control valve 10 and a first test end pressure stabilizing valve 14. In this case, the first test end pressure may also be a negative pressure. Stable and accurate provision of the first standard end pressure and the first test end pressure can be ensured by extracting gas using the vacuum generator via the related control valve and pressure stabilizing valve.

According to some embodiments of this application, optionally, the first test stage includes a first extraction period, a first pressure stabilization period, and a first test period. During the first extraction period, the first control valve 10, the first standard end pressure stabilizing valve 15, and the first test end pressure stabilizing valve 14 are all open, and gas is extracted from the first standard end and the first test end using the vacuum generator at a first extraction pressure controlled by a first extraction pressure reducing valve 5, such that at the end of the first extraction period, the first standard end pressure and the first test end pressure are substantially equal to a first specified pressure. During the first pressure stabilization period following the first extraction period, the first control valve 10 is closed, such that the gas extraction is stopped, and the first standard end pressure stabilizing valve 15 and the first test end pressure stabilizing valve 14 remain open, such that the first standard end and the first test end communicate with each other for pressure stabilization. During the first test period following the first pressure stabilization period, the first standard end pressure stabilizing valve 15 and the first test end pressure stabilizing valve 14 are closed to stop the pressure stabilization, and after a predetermined time, the first differential pressure sensor 16 detects the differential pressure value between the first standard end pressure and the first test end pressure, and the first leak detector 29 provides the inspection result of the airtightness of the battery pack body 26 based on the differential pressure value between the first standard end pressure and the first test end pressure. The detection result can be displayed on the indication panel 31. With such an arrangement, inspection precision of inspecting the airtightness of the battery pack body by differential pressure measurement can be further improved.

According to some embodiments of this application, optionally, the first test stage further includes a first pre-extraction period prior to the first extraction period. During the first pre-extraction period, gas is extracted from the first standard end and the first test end using the vacuum generator 6 at a first pre-extraction pressure controlled by the first extraction pressure reducing valve 5. The first pre-extraction pressure is typically set to be greater than the first extraction pressure. By initially using a higher pre-extraction pressure for a specified time for pre-extraction, followed by switching to a normal extraction pressure for gas extraction, the gas extraction can be completed more quickly and the test result can be more accurate.

According to some embodiments of this application, optionally, the first test unit further includes a first calibration portion. The first calibration portion is configured to perform automatic calibration of the first test unit. As shown in FIG. 1, the first calibration portion includes components such as a calibration gas control valve 20, a standard leak hole 21, a calibration leak gas control valve 22, and a calibration standard tank 23. The calibration standard tank 23 may be a standard volume tank with a capacity of 10 L. As shown in FIG. 1, with the test gas control valve 28 closed and the calibration gas control valve 20 open, an automatic calibration circuit can be switched to perform the automatic calibration of the first test unit. During the automatic calibration, the calibration leak gas control valve 22 is first closed. In this case, the automatic calibration circuit is connected to the calibration standard tank 23, which corresponds to good airtightness, so the detection value of the first differential pressure sensor 16 is calibrated to 0 (that is, the gas leakage amount is approximately 0). Then, the calibration leak gas control valve 22 is opened. In this case, the automatic calibration circuit is connected to the standard leak hole 21, so the detection value of the first differential pressure sensor 16 is calibrated to a value corresponding to a standard gas leakage amount of the standard leak hole 21, and the automatic calibration of the first differential pressure sensor 16 is completed. Performing automatic calibration can achieve automatic spot checks, and uploading the test results to a manufacturing execution system can confirm that the entire test system has no anomaly, facilitating seamless switching between automatic calibration and product test.

According to some embodiments of this application, optionally, the first test unit further includes a first inlet pressure sensor 12 and a first outlet pressure sensor 25. The first inlet pressure sensor 12 is configured to detect an injection pressure for injecting gas to the battery pack body 26 or an extraction pressure for extracting gas from the battery pack body 26. The first outlet pressure sensor 25 is configured to detect a gas pressure at an outlet of the battery pack body 26. Based on detection results of the first inlet pressure sensor 12 and the first outlet pressure sensor 25, fault diagnosis is able to be performed for the first test unit. With such a fault diagnosis, various faults in the first test unit can be quickly found and promptly dealt with.

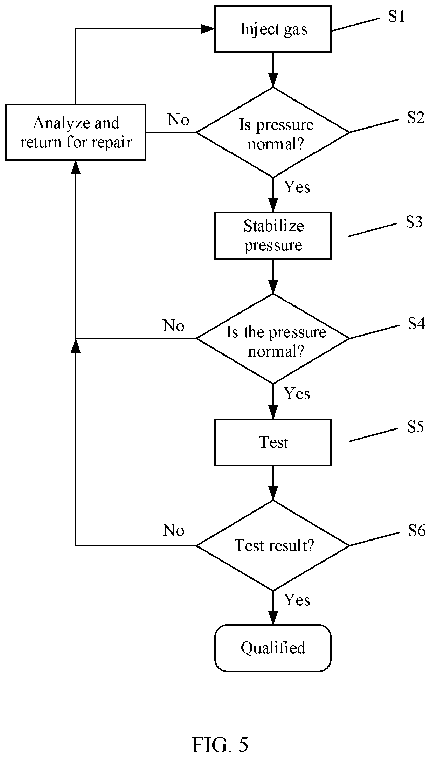

Specifically, FIG. 5 is an operational flowchart of the foregoing sealing test cabinet 100. As shown in FIG. 5, in step S1 (the first injection period), gas is injected to the first standard end and the first test end using the pressure stabilizing tank 3 at the first injection pressure controlled by the first injection pressure reducing valve 4. The pressure stabilizing tank 3 may be provided with a temperature sensor 9 for temperature detection and can trigger an alarm in a timely manner when gas temperature exceeds a limit. In step S2, the first inlet pressure sensor 12 detects the injection pressure for injecting gas to the battery pack body 26, and the first outlet pressure sensor 25 detects the gas pressure at the outlet of the battery pack body 26, thereby determining whether the pressure is normal. Based on whether the detection result of the first inlet pressure sensor 12 and/or the first outlet pressure sensor 25 is normal, various faults (including but not limited to whether a gas pipe is bent or leaking, whether blocking is intact, and whether there is undischarged gas inside the product) can be diagnosed. In the case of a fault, it can be analyzed and returned for repair in a timely manner, and the injection pressure can be automatically adjusted based on the detected pressure value. In step S3 (the first pressure stabilization period), the gas injection is stopped and the first standard end and the first test end communicate with each other for pressure stabilization. In step S4, the pressure detection is performed again to determine whether the pressure is normal. In step S5 (the first test period), the first differential pressure sensor 16 detects the differential pressure value. Finally, in step S6, the first leak detector 29 gives the detection result. Specifically, when the differential pressure value is greater than a set differential pressure threshold, an alarm is triggered, and the battery pack body is determined to have unqualified airtightness and then analyzed and returned for repair; otherwise, the battery pack body is determined to have qualified airtightness. An external exhaust valve 19 is opened to release the pressure inside the product. In a case that the battery pack body 26 and the water cooling plate 27 are tested simultaneously, the gas is discharged only after both tests are completed.

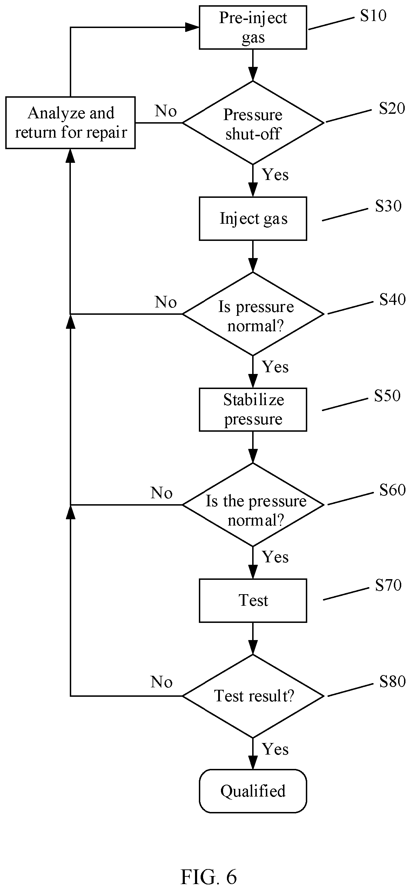

In addition, FIG. 6 is an operational flowchart of the foregoing sealing test cabinet 100, which includes a pre-injection step. As shown in FIG. 6, in step S10 (the first pre-injection period), gas is injected to the first standard end and the first test end using the pressure stabilizing tank 3 at the first pre-injection pressure controlled by the first injection pressure reducing valve 4. The pressure stabilizing tank 3 may be provided with the temperature sensor 9 for temperature detection and can trigger an alarm in a timely manner when gas temperature exceeds a limit. In step S20, the first inlet pressure sensor 12 detects the injection pressure for injecting gas to the battery pack body 26, and the first outlet pressure sensor 25 detects the gas pressure at the outlet of the battery pack body 26, thereby determining whether the pressure is normal. Based on whether the detection result of the first inlet pressure sensor 12 and/or the first outlet pressure sensor 25 is normal, various faults can be diagnosed. In the case of a fault, it can be analyzed and returned for repair in a timely manner, and the injection pressure can be automatically adjusted based on the detected pressure value. Subsequent steps S30 to S80 in FIG. 6 are substantially the same as steps S 1 to S6 shown in FIG. 5, and repeated descriptions are omitted herein.

According to some embodiments of this application, the second test unit has substantially the same structure and configuration as the first test unit. Optionally, the second test unit includes a second standard end, a second test end, a second differential pressure sensor, and a second leak detector. As shown in FIG. 1 and FIG. 3, the second standard end may be connected to the test standard tank 33 via a second standard end shut-off valve, such that the second standard end is configured to provide a second standard end pressure in a second test stage. The test standard tank 33 may be, for example, a standard volume tank with a capacity of 400 milliliters. Referring to FIG. 3, the test monitoring interface 34 may include the first test monitoring interface and the second test monitoring interface. The second test end is connected to the water cooling plate 27 via the second test monitoring interface and configured to provide a second test end pressure in the second test stage. The second differential pressure sensor is configured to detect a differential pressure value between the second standard end pressure and the second test end pressure in the second test stage. The second leak detector 30 is configured to provide an inspection result of the airtightness of the water cooling plate 27 based on the differential pressure value between the second standard end pressure and the second test end pressure. With such an arrangement, the airtightness of the water cooling plate can be precisely inspected by differential pressure measurement.

According to some embodiments of this application, optionally, the second standard end pressure is provided by injecting gas to the second standard end using the pressure stabilizing tank 3 via a second control valve 8 and a second standard end pressure stabilizing valve, and the second test end pressure is provided by injecting gas to the second test end using the pressure stabilizing tank 3 via the second control valve 8 and a second test end pressure stabilizing valve, where both the second standard end pressure and the second test end pressure are positive pressures. Stable and accurate provision of the second standard end pressure and the second test end pressure can be ensured by injecting gas using the pressure stabilizing tank 3 via the related control valve and pressure stabilizing valve.

According to some embodiments of this application, optionally, the second test stage includes a second injection period, a second pressure stabilization period, and a second test period. Specifically, during the second injection period, the second control valve 8, the second standard end pressure stabilizing valve, and the second test end pressure stabilizing valve are all open, and gas is injected to the second standard end and the second test end using the pressure stabilizing tank 3 at a second injection pressure controlled by a second injection pressure reducing valve 7, such that at the end of the second injection period, the second standard end pressure and the second test end pressure are substantially equal to a second specified pressure. During the second pressure stabilization period following the second injection period, the second control valve is closed, such that the gas injection is stopped, and the second standard end pressure stabilizing valve and the second test end pressure stabilizing valve remain open, such that the second standard end and the second test end communicate with each other for pressure stabilization. During the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector 30 provides the inspection result of the airtightness of the water cooling plate 27 based on the differential pressure value between the second standard end pressure and the second test end pressure. With such an arrangement, inspection precision of inspecting the airtightness of the water cooling plate by differential pressure measurement can be further improved.

According to some embodiments of this application, optionally, the second test stage further includes a second pre-injection period prior to the second injection period. During the second pre-injection period, gas is injected to the second standard end and the second test end using the pressure stabilizing tank 3 at a second pre-injection pressure controlled by the second injection pressure reducing valve 7. The second pre-injection pressure is typically set to be greater than the second injection pressure. By initially using a higher pre-injection pressure for a specified time for pre-injection, followed by switching to a normal injection pressure for gas injection, the gas injection can be completed more quickly and the test result can be more accurate.

According to some embodiments of this application, optionally, the second standard end pressure is provided by extracting gas from the second standard end using the vacuum generator via a second control valve and a second standard end pressure stabilizing valve. Therefore, the first standard end pressure is a negative pressure. In addition, the second test end pressure can be provided by extracting gas from the second test end using the vacuum generator via the second control valve and a second test end pressure stabilizing valve. In this case, the second test end pressure may also be a negative pressure. Stable and accurate provision of the second standard end pressure and the second test end pressure can be ensured by extracting gas using the vacuum generator via the related control valve and pressure stabilizing valve.

According to some embodiments of this application, optionally, the second test stage includes a second extraction period, a second pressure stabilization period, and a second test period. During the second extraction period, the second control valve, the second standard end pressure stabilizing valve, and the second test end pressure stabilizing valve are all open, and gas is extracted from the second standard end and the second test end using the vacuum generator at a second extraction pressure controlled by a second extraction pressure reducing valve, such that at the end of the second extraction period, the second standard end pressure and the second test end pressure are substantially equal to a second specified pressure. During the second pressure stabilization period following the second extraction period, the second control valve is closed, such that the gas extraction is stopped, and the second standard end pressure stabilizing valve and the second test end pressure stabilizing valve remain open, such that the second standard end and the second test end communicate with each other for pressure stabilization. During the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector 30 provides the inspection result of the airtightness of the water cooling plate 27 based on the differential pressure value between the second standard end pressure and the second test end pressure. With such an arrangement, inspection precision of inspecting the airtightness of the water cooling plate by differential pressure measurement can be further improved.

According to some embodiments of this application, optionally, the second test stage further includes a second pre-extraction period prior to the second extraction period. During the second pre-extraction period, gas is extracted from the second standard end and the second test end using the vacuum generator at a second pre-extraction pressure controlled by the second extraction pressure reducing valve. The second pre-extraction pressure is typically set to be greater than the second extraction pressure. By initially using a higher pre-extraction pressure for a specified time for pre-extraction, followed by switching to a normal extraction pressure for gas extraction, the gas extraction can be completed more quickly and the test result can be more accurate.

According to some embodiments of this application, optionally, the second test unit further includes a second calibration portion. The second calibration portion is configured to perform automatic calibration of the second test unit. The second calibration portion has substantially the same structure and configuration as the first calibration portion, and repeated descriptions are omitted herein. Performing automatic calibration can achieve automatic spot checks, and uploading the test results to a manufacturing execution system can confirm that the entire test system has no anomaly, facilitating seamless switching between automatic calibration and product test.

According to some embodiments of this application, optionally, the second test unit further includes a second inlet pressure sensor and a second outlet pressure sensor 24. The second inlet pressure sensor is configured to detect an injection pressure for injecting gas to the water cooling plate 27 or an extraction pressure for extracting gas from the water cooling plate 27. The second outlet pressure sensor 24 is configured to detect a gas pressure at an outlet of the water cooling plate 27. Based on detection results of the second inlet pressure sensor and the second outlet pressure sensor, fault diagnosis is able to be performed for the second test unit. Similar to the foregoing description, with such a fault diagnosis, various faults in the second test unit can be quickly found and promptly dealt with.

According to some embodiments of this application, optionally, the sealing test cabinet 100 includes an exhaust valve. The exhaust valve is configured to discharge gas inside the battery pack body 26 and/or the water cooling plate 27 after the test is completed. As shown in FIG. 1, the exhaust valve may include an internal exhaust valve 13 and an external exhaust valve 19. Discharging the gas filled into the battery pack body and the water cooling plate in a timely manner after the test is completed can prevent the problems such as bulging of the battery pack body or failure in smooth removal of the workpiece caused by residual gas.

According to some embodiments of this application, referring to FIG. 1 to FIG. 4, this application provides a sealing test cabinet 100 for battery pack. As shown in the figure, the battery pack includes a battery pack body 26 and a water cooling plate 27. The sealing test cabinet 100 includes a housing 101, a first test unit arranged in the housing 101, and a second test unit arranged in the housing 101. The first test unit is configured to test airtightness of the battery pack body 26, and the second test unit is configured to test airtightness of the water cooling plate 27.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A sealing test cabinet for battery pack, wherein the battery pack comprises a battery pack body and a water cooling plate, **characterized in that** the sealing test cabinet comprises:
a housing;
a first test unit arranged in the housing, the first test unit being configured to test airtightness of the battery pack body; and
a second test unit arranged in the housing, the second test unit being configured to test airtightness of the water cooling plate.

2. The sealing test cabinet according to claim 1, **characterized in that** the sealing test cabinet further comprises: a pressure stabilizing tank, wherein the pressure stabilizing tank is operably connected to the first test unit and the second test unit and configured to inject gas to the battery pack body and the water cooling plate; and a vacuum generator, wherein the vacuum generator is operably connected to the first test unit and the second test unit and configured to extract gas from the battery pack body and the water cooling plate.

3. The sealing test cabinet according to claim 2, **characterized in that** the first test unit comprises:
a first standard end, the first standard end being configured to provide a first standard end pressure in a first test stage;
a first test end, the first test end being connected to the battery pack body via a first test monitoring interface and configured to provide a first test end pressure in the first test stage;
a first differential pressure sensor, the first differential pressure sensor being configured to detect a differential pressure value between the first standard end pressure and the first test end pressure in the first test stage; and
a first leak detector, the first leak detector being configured to provide an inspection result of the airtightness of the battery pack body based on the differential pressure value between the first standard end pressure and the first test end pressure.

4. The sealing test cabinet according to claim 3, **characterized in that** the first standard end pressure is provided by injecting gas to the first standard end using the pressure stabilizing tank via a first control valve and a first standard end pressure stabilizing valve, and the first test end pressure is provided by injecting gas to the first test end using the pressure stabilizing tank via the first control valve and a first test end pressure stabilizing valve, wherein both the first standard end pressure and the first test end pressure are positive pressures.

5. The sealing test cabinet according to claim 4, **characterized in that** the first test stage comprises a first injection period, a first pressure stabilization period, and a first test period, wherein
during the first injection period, the first control valve, the first standard end pressure stabilizing valve, and the first test end pressure stabilizing valve are all open, and gas is injected to the first standard end and the first test end using the pressure stabilizing tank at a first injection pressure controlled by a first injection pressure reducing valve, such that at the end of the first injection period, the first standard end pressure and the first test end pressure are substantially equal to a first specified pressure;
during the first pressure stabilization period following the first injection period, the first control valve is closed, such that the gas injection is stopped and the first standard end and the first test end communicate with each other for pressure stabilization; and
during the first test period following the first pressure stabilization period, the first standard end pressure stabilizing valve and the first test end pressure stabilizing valve are closed to stop the pressure stabilization, and after a predetermined time, the first differential pressure sensor detects the differential pressure value between the first standard end pressure and the first test end pressure, and the first leak detector provides the inspection result of the airtightness of the battery pack body based on the differential pressure value between the first standard end pressure and the first test end pressure.

6. The sealing test cabinet according to claim 5, **characterized in that** the first test stage further comprises a first pre-injection period prior to the first injection period, wherein during the first pre-injection period, gas is injected to the first standard end and the first test end using the pressure stabilizing tank at a first pre-injection pressure controlled by the first injection pressure reducing valve, the first pre-injection pressure being greater than the first injection pressure.

7. The sealing test cabinet according to claim 3, **characterized in that** the first standard end pressure is provided by extracting gas from the first standard end using the vacuum generator via a first control valve and a first standard end pressure stabilizing valve, and the first test end pressure is provided by extracting gas from the first test end using the vacuum generator via the first control valve and a first test end pressure stabilizing valve, wherein both the first standard end pressure and the first test end pressure are negative pressures.

8. The sealing test cabinet according to claim 7, **characterized in that** the first test stage comprises a first extraction period, a first pressure stabilization period, and a first test period, wherein:
during the first extraction period, the first control valve, the first standard end pressure stabilizing valve, and the first test end pressure stabilizing valve are all open, and gas is extracted from the first standard end and the first test end using the vacuum generator at a first extraction pressure controlled by a first extraction pressure reducing valve, such that at the end of the first extraction period, the first standard end pressure and the first test end pressure are substantially equal to a first specified pressure;
during the first pressure stabilization period following the first extraction period, the first control valve is closed, such that the gas extraction is stopped and the first standard end and the first test end communicate with each other for pressure stabilization; and
during the first test period following the first pressure stabilization period, the first standard end pressure stabilizing valve and the first test end pressure stabilizing valve are closed to stop the pressure stabilization, and after a predetermined time, the first differential pressure sensor detects the differential pressure value between the first standard end pressure and the first test end pressure, and the first leak detector provides the inspection result of the airtightness of the battery pack body based on the differential pressure value between the first standard end pressure and the first test end pressure.

9. The sealing test cabinet according to claim 8, **characterized in that** the first test stage further comprises a first pre-extraction period prior to the first extraction period, wherein during the first pre-extraction period, gas is extracted from the first standard end and the first test end using the vacuum generator at a first pre-extraction pressure controlled by the first extraction pressure reducing valve, the first pre-extraction pressure being greater than the first extraction pressure.

10. The sealing test cabinet according to any one of claims 3 to 9, **characterized in that** the first test unit further comprises a first calibration portion, the first calibration portion being configured to perform automatic calibration of the first test unit.

11. The sealing test cabinet according to any one of claims 3 to 10, **characterized in that** the first test unit further comprises:
a first inlet pressure sensor, the first inlet pressure sensor being configured to detect an injection pressure for injecting gas to the battery pack body or an extraction pressure for extracting gas from the battery pack body; and
a first outlet pressure sensor, the first outlet pressure sensor being configured to detect a gas pressure at an outlet of the battery pack body;
wherein based on detection results of the first inlet pressure sensor and the first outlet pressure sensor, fault diagnosis is able to be performed for the first test unit.

12. The sealing test cabinet according to any one of claims 3 to 11, **characterized in that** the second test unit comprises:
a second standard end, the second standard end being configured to provide a second standard end pressure in a second test stage;
a second test end, the second test end being connected to the water cooling plate via a second test monitoring interface and configured to provide a second test end pressure in the second test stage;
a second differential pressure sensor, the second differential pressure sensor being configured to detect a differential pressure value between the second standard end pressure and the second test end pressure in the second test stage; and
a second leak detector, the second leak detector being configured to provide an inspection result of the airtightness of the water cooling plate based on the differential pressure value between the second standard end pressure and the second test end pressure.

13. The sealing test cabinet according to claim 12, **characterized in that** the second standard end pressure is provided by injecting gas to the second standard end using the pressure stabilizing tank via a second control valve and a second standard end pressure stabilizing valve, and the second test end pressure is provided by injecting gas to the second test end using the pressure stabilizing tank via the second control valve and a second test end pressure stabilizing valve, wherein both the second standard end pressure and the second test end pressure are positive pressures.

14. The sealing test cabinet according to claim 13, **characterized in that** the second test stage comprises a second injection period, a second pressure stabilization period, and a second test period, wherein:
during the second injection period, the second control valve, the second standard end pressure stabilizing valve, and the second test end pressure stabilizing valve are all open, and gas is injected to the second standard end and the second test end using the pressure stabilizing tank at a second injection pressure controlled by a second injection pressure reducing valve, such that at the end of the second injection period, the second standard end pressure and the second test end pressure are substantially equal to a second specified pressure;
during the second pressure stabilization period following the second injection period, the second control valve is closed, such that the gas injection is stopped and the second standard end and the second test end communicate with each other for pressure stabilization; and
during the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector provides the inspection result of the airtightness of the water cooling plate based on the differential pressure value between the second standard end pressure and the second test end pressure.

15. The sealing test cabinet according to claim 14, **characterized in that** the second test stage further comprises a second pre-injection period prior to the second injection period, wherein during the second pre-injection period, gas is injected to the second standard end and the second test end using the pressure stabilizing tank at a second pre-injection pressure controlled by the second injection pressure reducing valve, the second pre-injection pressure being greater than the second injection pressure.

16. The sealing test cabinet according to claim 12, **characterized in that** the second standard end pressure is provided by extracting gas from the second standard end using the vacuum generator via a second control valve and a second standard end pressure stabilizing valve, and the second test end pressure is provided by extracting gas from the second test end using the vacuum generator via the second control valve and a second test end pressure stabilizing valve, wherein both the second standard end pressure and the second test end pressure are negative pressures.

17. The sealing test cabinet according to claim 16, **characterized in that** the second test stage comprises a second extraction period, a second pressure stabilization period, and a second test period, wherein:
during the second extraction period, the second control valve, the second standard end pressure stabilizing valve, and the second test end pressure stabilizing valve are all open, and gas is extracted from the second standard end and the second test end using the vacuum generator at a second extraction pressure controlled by a second extraction pressure reducing valve, such that at the end of the second extraction period, the second standard end pressure and the second test end pressure are substantially equal to a second specified pressure;
during the second pressure stabilization period following the second extraction period, the second control valve is closed, such that the gas extraction is stopped and the second standard end and the second test end communicate with each other for pressure stabilization; and
during the second test period following the second pressure stabilization period, the second standard end pressure stabilizing valve and the second test end pressure stabilizing valve are closed to stop the pressure stabilization, and after a predetermined time, the second differential pressure sensor detects the differential pressure value between the second standard end pressure and the second test end pressure, and the second leak detector provides the inspection result of the airtightness of the water cooling plate based on the differential pressure value between the second standard end pressure and the second test end pressure.

18. The sealing test cabinet according to claim 17, **characterized in that** the second test stage further comprises a second pre-extraction period prior to the second extraction period, wherein during the second pre-extraction period, gas is extracted from the second standard end and the second test end using the vacuum generator at a second pre-extraction pressure controlled by the second extraction pressure reducing valve, the second pre-extraction pressure being greater than the second extraction pressure.

19. The sealing test cabinet according to any one of claims 12 to 18, **characterized in that** the second test unit further comprises a second calibration portion, the second calibration portion being configured to perform automatic calibration of the second test unit.

20. The sealing test cabinet according to any one of claims 12 to 19, **characterized in that** the second test unit further comprises:
a second inlet pressure sensor, the second inlet pressure sensor being configured to detect an injection pressure for injecting gas to the water cooling plate or an extraction pressure for extracting gas from the water cooling plate; and
a second outlet pressure sensor, the second outlet pressure sensor being configured to detect a gas pressure at an outlet of the water cooling plate;
wherein based on detection results of the second inlet pressure sensor and the second outlet pressure sensor, fault diagnosis is able to be performed for the second test unit.

21. The sealing test cabinet according to any one of claims 1 to 20, **characterized in that** the sealing test cabinet comprises an exhaust valve, the exhaust valve being configured to discharge gas inside the battery pack body and/or the water cooling plate after the test is completed.
